# EUROPEAN PATENT APPLICATION

(11) **EP 4 389 720 A1**
(43) Date of publication of application: **26.06.2024**
(21) Application number: 22000263.8
(22) Date of filing: 21.12.2022
(51) Int. Cl.: C04B 28/02, C04B 28/04, C04B 28/06

(54) **A CIRCULAR PROCESS FOR THE RECOVERY OF MINERAL WASTE MATERIALS**

(71) Applicant: Eberhard Bau AG, 8302 Kloten (CH)
(72) Inventor: ETTER, Marco, 8645 Jona (CH); GONZENBACH, Urs T., 8107 Buchs (CH); STURZENEGGER, Philip N., 8117 Fällanden (CH)
(74) Representative: Witz, Michael

(57) **Abstract**

The present invention relates to a circular process for the recycling of mineral waste and/or existing building materials to obtain a lightweight building material having a dry density of from 60 to 1500 kg/m³, preferably from 300 to 1200 kg/m³, more preferably from 600 to 1000 kg/m³, comprising the steps of breaking up, crushing, and optionally milling, sorting, washing, filtering, concentrating, drying and/or screening mineral waste, existing building materials and/or soils to obtain a recycled material having a median particle size d₅₀, as measured by laser granulometry, of from 1 µm to 6 mm, preferably from 1 µm to 4 mm, more preferably from 5 µm to 4 mm, even more preferably from 5 µm to 1 mm, and most preferably from 10 µm to 0.7 mm; mixing 40 to 90 parts by weight of the recycled material, calculated as dry weight, and 10 to 60 parts by weight of a cement; adding a foaming agent, optional additives and water to obtain a suspension; foaming the resulting suspension by physical, chemical or mechanical means; and allowing the foamed suspension to harden and dry. Moreover, the present invention relates to a lightweight building material having a dry density of from 60 to 1500 kg/m³, preferably from 300 to 1200 kg/m³, more preferably from 600 to 1000 kg/m³, obtainable by said process.

## Description

The present invention relates to a circular process for the recycling of mineral waste and/or existing building materials and to a lightweight building material having a dry density of from 60 to 1500 kg/m³, preferably from 300 to 1200 kg/m³, more preferably from 600 to 1000 kg/m³, obtainable by this process.

A growing economy in a world of limited resources and limited landfill capacity can only be sustainable if the highest possible recycling rate is achieved while downgrading of the recycled materials is avoided.

Successful recycling has been established in the case of glass, aluminum, paper, tin, and the like. Existing building materials and mineral wastes are particularly difficult to recycle because of the high variability and often poor quality of these materials.

There are two basic types of recycling, namely open-loop recycling and closed-loop recycling. Open-loop recycling is characterized by the generation of waste and/or the downgrading of the recycled material while closed-loop recycling produces minimal waste and does not result in a downgrading of the recycled material. Of course, a closed recycling loop is highly desirable.

Several attempts have been made in recycling waste concrete into foamed concrete.

CN 101391902 A discloses (according to claim 1 in machine translation) a foamed concrete made of waste concrete, which is formed by mixing cementitious slurry and foam, characterized in that the cementitious slurry contains recycled concrete aggregates, cement and water formed by crushing and screening the waste concrete. According to claim 4 and all examples of CN 101391902 A, the gelling cementitious slurry and the foam produced by the foaming agent are mixed to form a foamed slurry. In contrast thereto, the suspension of the present invention (recycled material together with cement, foaming agent, optional additives and water) is subsequently foamed by physical, chemical or mechanical means.

CN 108726958 A discloses (according to the abstract in machine translation) a method for preparing concrete partition walls from building waste. The concrete partition wall comprises, by weight, 65 to 90 % of building waste sand powder, 5 to 20% of cement, 0.05 to 4.5% of a foaming agent, 0.2 to 5% of a concrete waterproofing agent, 0.05 to 4.5% of a concrete additive, and 0.2 to 5% of fiber. Foaming is performed (claim 1) by adding to the obtained foaming agent foam the mixed concrete material that has been mixed on the construction site.

In contrast thereto, the suspension of the present invention (recycled material together with cement, foaming agent, optional additives and water) is subsequently foamed by physical, chemical or mechanical means.

CN 106747642 A discloses (according to the abstract in machine translation) a method comprising: firstly, carrying out processing of crushing, sorting and the like on building waste to obtain recycled coarse and fine aggregate; then carrying out batching on cement, the recycled coarse aggregate, haycite, the recycled fine aggregate, bamboo fibers, silica sol, a water reducing agent and water, and uniformly stirring; after sufficiently foaming a foaming agent by a foaming machine, mixing foam and slurry to prepare foam concrete; then carrying out pumping, injection molding and maintenance and demolding to take the brick; finally, coating the surface with a modified polyurethane waterproof paint. In contrast thereto, the suspension of the present invention (recycled material together with cement, foaming agent, optional additives and water) is subsequently foamed by physical, chemical or mechanical means.

CN 108892535 A discloses (according to the abstract in machine translation) a self-leveling recycled lightweight aggregate concrete for a building mold net and a preparation method thereof. The concrete is prepared from, by weight, 25-55% of cementitious material, 15-40% of recycled lightweight aggregate, 1-4% of vermiculite powder, 0.2-1.2% of thixotropic lubricant, 0.05-0.5% of the ecological fiber, 0.2-2% of physical foaming agent, 0.05-0.2% of foam stabilizer, 0.2-1.5% of water reducing agent, 0.03-0.3% of anti-separation agent and 10-35% of water. In the examples of CN 108892535 A, the lightweight aggregate is added to a previously foamed slurry mixture. In contrast thereto, the suspension of the present invention (recycled material together with cement, foaming agent, optional additives and water) is subsequently foamed by physical, chemical or mechanical means. Moreover, the amount of lightweight aggregate used is rather small compared to the weight the recycled material to be used according to the present invention.

CN 109369215 A discloses (according to the abstract in machine translation) a building material which is prepared from the following raw materials (in parts by weight): 21-41 parts of cement paste, 3-14 parts of recycled aggregate, 2-13 parts of clay, 4-13 parts of blast-furnace slag, 2-13 parts of aluminosilicate fiber cotton, 11-17 parts of Songhua stone powder, 2-9 parts of a mineral admixture, 1.1-2.5 parts of a crosslinking agent, 0.7-2.3 parts of a thickening agent, 0.5-1.1 parts of a flame retardant, 1-1.5 parts of a foaming agent and 6-15 parts of a watersoluble polymer compound aqueous solution. In contrast thereto, the amount of recycled material used according to the present invention is much higher.

CN 113149580 A discloses (according to claim 1 in machine translation) a recycled foam concrete including the following components: cementitious material slurry, thermal insulation filler, water reducing agent and foam, the mass ratio of cement in the cementitious material being 50%. The mass ratio of the recycled fine powder is 30% [0008]. Foaming is done by physical means. In the present invention, in contrast, the ratio of recycled material to cement is at least 40 parts to 60 parts.

CN 105777018 discloses (according to claim 1 in machine translation) a foamed concrete containing recycled inorganic lightweight aggregate, characterized in that its raw materials include 20-60 parts of cement, 20-60 parts of slag, 0-50 parts of sand, 0.5-3 parts of water reducing agent, and 0.1-3 parts of fibers, 25-60 parts of water, foam with an admixture of 1-80% of the volume of the foamed concrete, and recycled inorganic light aggregate with an admixture of 1-80% of the total volume of the foamed concrete. According to claim 9, mechanically obtained foam is added into the cement slurry. In contrast thereto, the suspension of the present invention (recycled material together with cement, foaming agent, optional additives and water) is subsequently foamed by physical, chemical or mechanical means.

CN 113149706 A discloses (according to the abstract in machine translation) a high-performance foamed concrete, the high-performance foamed concrete comprises the following components: cement, construction waste recycled aggregate, fly ash, a foaming agent, ghatti gum, bentonite, a water reducing agent and water. According to claim 2, the foamed concrete is characterized in that it comprises the following components in parts by mass: 30-50 parts of cement, 15-30 parts of construction waste recycled aggregate, 10-20 parts of fly ash, and 0.5-0.8 part of foaming agent, 0.01-0.05 part Dava gum, 0.005-0.05 part bentonite, 1-1.5 part water reducing agent and 15-25 part water. In contrast thereto, the amount of recycled material used according to the present invention is much higher. Using recycled materials for producing lightweight building materials becomes increasingly difficult as higher amounts of recycled materials are to be used.

WO 2020163945 A1 discloses (in the abstract) systems and methods of sequestering carbon dioxide in concrete. The methods include combining water and a foaming agent to form a foaming agent mixture, adding a gas comprising carbon dioxide to the foaming agent mixture in a first mixing chamber, mixing the water, the gas comprising carbon dioxide and the foaming agent to form a foam mixture in the first mixing chamber, the foam mixture comprising a plurality of foam bubbles containing the at least a portion of the carbon dioxide, combining the foam mixture with concrete materials in a second mixing chamber so that the foam mixture contacts the concrete materials, the concrete materials comprising cement, and mixing the foam mixture and the concrete materials in the second mixing chamber to form the concrete having the carbon dioxide sequestered therein. The concrete materials may include recycled concrete [0045]. Unlike in the present invention, the foam is produced separately before the addition of the concrete materials.

There exists a need for a robust circular recycling process for various mineral waste and/or existing building materials allowing that a large quantity of recycled material can be incorporated in a foamed lightweight building material. This process should be capable of many repetitions, meaning that the lightweight building material itself may be recycled again and again without deterioration of its quality.

This problem is solved with the features of the independent claims. The dependent claims refer to preferred embodiments.

According to a first aspect, the present invention provides a circular process for the recycling of mineral waste and/or existing building materials to obtain a lightweight building material having a dry density of from 60 to 1500 kg/m³, preferably from 300 to 1200 kg/m³, more preferably from 600 to 1000 kg/m³, comprising the steps of: breaking up, crushing, and optionally milling, sorting, washing, filtering, concentrating, drying and/or screening mineral waste, existing building materials and/or soils to obtain a recycled material having a median particle size dso, as measured by laser granulometry, of from 1 µm to 6 mm, preferably from 1 µm to 4 mm, more preferably from 5 µm to 4 mm, even more preferably from 5 µm to 1 mm, and most preferably from 10 µm to 0.7 mm; mixing 40 to 90 parts by weight of the recycled material, calculated as dry weight, and 10 to 60 parts by weight of a cement; adding a foaming agent, optional additives and water to obtain a suspension; foaming the resulting suspension by physical, chemical or mechanical means; casting and allowing the foamed suspension to harden and dry.

The meaning of the term "comprising" is to be interpreted as encompassing all the specifically mentioned features as well optional, additional, unspecified ones, whereas the term "consisting of" includes only those features as specified. All percentages indicated are given in percent by weight, calculated on the total weight or dry weight of the respective formulation. The symbols used throughout this specification are "%" or, synonymously, "wt.-%" It is moreover intended that in each actual case the sum of all of the percentages of the specified and unspecified constituents of a formulation is always 100%.

A "circular process", as this term is used throughout the present specification, means that this process is part of a recycling loop. This may be a partially open-loop recycling process but preferably refers to a closed-loop recycling process.

The circular process according to the present invention ideally does not produce waste. Moreover, as will be shown in the experimental section (Examples 2.1 and 2.2), there is no downgrading i.e. no significant deterioration of the manufactured lightweight building material even after several recycling cycles. There exists, however, a need for fresh cement in every cycle. This need could be overcome by burning at least part of the recycled material to restore its hydraulic properties. However, this would make sense only if cheap renewable energy were abundantly available.

The process according to the present invention yields a lightweight building material. The lightweight building material is a foamed material. It has a dry density of from 60 to 1500 kg/m³, preferably from 60 to 1200 kg/m³ or from 300 to 1500 kg/m³, even more preferably from 300 to 1200 kg/m³ and most preferably from 600 to 1000 kg/m³. According to one preferred embodiment, the dry density may be from 60 to 299 kg/m³, according to another preferred embodiment, the dry density may be from 300 to 1500 kg/m³.

Mineral waste and/or existing building materials may be obtained from the demolition of existing buildings, from other industrial processes (e.g. brick production, brick and tile cutting etc.) or from soils. Such soils may be found at building sites, at demolition sites and/or at burdened sites such as firing ranges.

The mineral waste and/or the existing building material of the present invention preferably comprises hydrated cement, hydrated concrete, bricks, brick dust, tiles, stones, gravel, sand, plaster, floor screed, lightweight materials, composite stone, chamotte, lime stone, calcined clay, the lightweight building material of this process, and mixtures thereof.

The preparation of mineral waste and/or the existing building materials includes breaking up and crushing mineral waste, existing building materials and/or soils. These steps are mandatory. The material may also undergo optional milling, sorting, washing, filtering, concentrating, drying and/or screening to obtain a recycled material having a median particle size d₅₀, as measured by laser granulometry, of from 1 µm to 6 mm, preferably from 1 µm to 4 mm, more preferably from 5 µm to 4 mm, even more preferably from 5 µm to 1 mm, and most preferably from 10 µm to 0.7 mm. If washing is necessary, the washing water should also be recycled. The particle size of the recycled material is important. The material shouldn't be much larger than grains of sand and not smaller than 1 µm.

In the next step 40 to 90 parts by weight of the recycled material, calculated as dry weight, are mixed with 10 to 60 parts by weight of a (dry, i.e. unhydrated) cement. It is remarkable that this process allows for up to 90 parts by weight of the recycled material and requires as little as 10 parts by weight of a cement.

The above mentioned cement is preferably selected from cements of the categories CEM I, CEM II, CEM III, CEM IV, CEM V, preferably from Portland cement, from high alumina cement, calcium sulfoaluminate cement, limestone calcined clay cement (LC3) or mixture thereof, optionally in combination with calcium sulfate.

The process according to the present invention generally employs a weight ratio of the recycled material to the cement of from 40:60 to 90:10. Preferred ranges are from 50:50 to 90:10, more preferably from 60:40 to 90:10, most preferably from 70:30 to 90:10 and in particular from 75:25 to 90:10.

In a further step, a foaming agent, optional additives and water are added to obtain a suspension.

The weight ratio of water to solid components in the suspension to be foamed is suitably between 0.1 and 1.5, preferably between 0.15 and 1, more preferably between 0.15 and 0.6 and most preferably between 0.15 and 0.5.

In a next step the resulting suspension is foamed by physical, chemical or mechanical means, followed by casting and allowing the foamed suspension to harden and dry. The term "to cast" means that the suspension is poured into a mold and optionally covered. In case of chemical foaming, the suspension may require additional time to fully expand. These steps, however, are well known in the art and do not require further explanation.

"Water" as denoted herein, can refer to pure, deionized H₂O, or water containing up to 0.1% of impurities and/or salts, such as tap water. However, recycled water or water coming from construction sites may suffice.

The "foaming agent" can be a surfactant. It may also be a protein or a (modified) starch. Furthermore and preferably, it may be a surface modified particle stabilizing system as will be explained in further detail hereinbelow.

Surfactants, which may be used in addition to the amphiphilic compounds as defined herein, include non-ionic surfactants, anionic surfactants, cationic surfactants, zwitterionic surfactants or synthetic polymers. The proportion of the surfactant can vary over a broad range. The surfactant may be present in an amount of up to 2.5 wt.-%, preferably up to 1.5 wt.-%, based on the total weight of the suspension. However, surfactants are not preferred as they tend to yield open-cell foams.

Non-ionic surfactants include fatty alcohols, cetyl alcohol, stearyl alcohol, and cetostearyl alcohol (comprising predominantly cetyl and stearyl alcohols), and oleyl alcohol. Further examples include polyethylene glycol alkyl ethers (Brij^{®}) CH₃-(CH₂)₁₀₋₁₆-(O-C₂H₄)₁₋₂₅-OH such as octaethylene glycol monododecyl ether or pentaethylene glycol monododecyl ether; polypropylene glycol alkyl ethers CH₃-(CH₂)₁₀₋₁₆-(O-C₃H₆)₁₋₂₅-OH; glucoside alkyl ethers CH₃-(CH₂)₁₀₋₁₆-(O-Glucoside)₁₋₃-OH such as decyl glucoside, lauryl glucoside, octyl glucoside; polyethylene glycol octylphenyl ethers C₈H₁₇-(C₆H₄)-(O-C₂H₄)₁₋₂₅-OH such as Triton X-100; polyethylene glycol alkylphenyl ethers C₉H₁₉-(C₆H₄)-(O-C₂H₄)₁₋₂₅-OH such as nonoxynol-9; glycerol alkyl esters such as glyceryl laurate; polyoxyethylene glycol sorbitan alkyl esters such as polysorbate; sorbitan alkyl esters such as spans; cocamide MEA, cocamide DEA; dodecyldimethylamine oxide; block copolymers of polyethylene glycol and polypropylene glycol such as poloxamers; polyethoxylated tallow amine (POEA). Preferred non-ionic surfactants also include alkyl polyglucosides. Alkyl polyglucosides generally have the formula H-(C₆H₁₀O₅)ₘ-O-R¹, where (C₆H₁₀O₅) is a anhydro glucose unit and R¹ is a C₆-C₂₂-alkyl group, preferably a C₈-C₁₆-alkyl group and in particular a C₈-C₁₂-alkyl group, and m is from 1 to 5.

Anionic surfactants contain anionic functional groups at their head, such as sulfate, sulfonate, phosphate, and carboxylates. Prominent alkyl sulfates include ammonium lauryl sulfate, sodium lauryl sulfate (sodium dodecyl sulfate, SLS, or SDS), and the related alkyl-ether sulfates sodium laureth sulfate (sodium lauryl ether sulfate or SLES), and sodium myreth sulfate. Others include docusate (dioctyl sodium sulfosuccinate), perfluorooctanesulfonate (PFOS), perfluorobutanesulfonate, alkyl-aryl ether phosphates, alkyl ether phosphates. Preferred carboxylates include the alkyl carboxylates, such as sodium stearate. More specialized species include sodium lauroyl sarcosinate and carboxylate-based fluorosurfactants such as perfluorononanoate, perfluorooctanoate (PFOA or PFO).

Cationic surfactants include, dependent on the pH, primary, secondary, or tertiary amines:
Primary and secondary amines become positively charged at pH < 10. An example is octenidine dihydrochloride. Furthermore, cationic surfactants include permanently charged quaternary ammonium salts, such as cetrimonium bromide (CTAB), cetylpyridinium chloride (CPC), benzalkonium chloride (BAC), benzethonium chloride (BZT), dimethyldioctadecyl-ammonium chloride, dioctadecyldimethylammonium bromide (DODAB).

Zwitterionic (amphoteric) surfactants have both cationic and anionic centers attached to the same molecule. The cationic part is based on primary, secondary, or tertiary amines or quaternary ammonium cations. The anionic part can be more variable and include sulfonates, as in the sultaines CHAPS (3-[(3-Cholamidopropyl)dimethylammonio]-1-propanesulfonate) and cocamidopropyl hydroxysultaine. Betaines such as cocamidopropyl betaine have a carboxylate with the ammonium. The most common biological zwitterionic surfactants have a phosphate anion with an amine or ammonium, such as the phospholipids phosphatidylserine, phosphatidylethanolamine, phosphatidylcholine, and sphingomyelins. Non-limiting examples of proteins are bovine serum albumin, egg ovalbumin, milk caseins or beta-lactoglobulin.

The above mentioned foaming agent may preferably be a surface modified particle stabilizing system comprising at least one amphiphilic compound and at least one group of inorganic particles, wherein the inorganic particles are not identical to the recycled material and not identical to the cement.

The inorganic particles are preferably selected from the group consisting of oxides, hydroxides, carbides, nitrides, phosphates, carbonates, silicates, sulfates, and mixtures thereof. They should be selected so that they will not easily dissolve in or readily react with the aqueous cementitious medium.

Moreover, the inorganic particles are more preferably selected from the group consisting of silica particles, alumina particles, zirconia particles, calcium carbonate particles, and mixtures thereof. In a most preferred embodiment, the inorganic particles are calcium carbonate particles.

The size of the inorganic particles may be selected within wide ranges. They should have a median particle size d₅₀, as measured by laser granulometry, of from 30 nm to 300 µm, preferably from 100 nm to 250 µm, and more preferably from 100 nm to 100 µm. In a further preferred embodiment, suitable particle sizes range from 100 nm to 10 µm, more preferably 100 nm to 5 µm and most preferably from 700 nm to 3 µm. It was found that the particle size distribution is of less importance. Good foams can be obtained with narrow as well as with broad particle size distributions. It is, however, worthwhile mentioning that the inorganic particles are on average much smaller than the recycled material. The particles should be small enough to not disrupt the walls of the gas bubbles in the obtained foam.

The term "particle size (dₓ)" refers to the diameter of a particle distribution, wherein x % of the particles have a smaller diameter. The d₅₀ particle size is thus the median particle size. The dₓ particle size can e.g. be measured by laser diffraction or dynamic light scattering (DLS) methods. According to the present invention dynamic light scattering (DLS) according to ISO 22412:2008 is preferably used (herein dubbed "laser granulometry"). Dynamic light scattering (DLS), sometimes referred to as Quasi-Elastic Light Scattering (QELS), is a non-invasive, well-established technique for measuring the size and size distribution of molecules and particles typically in the submicron region. In the present invention the particles were characterized, which have been dispersed in a liquid, preferably water or ethanol. The Brownian motion of particles or molecules in suspension causes laser light to be scattered at different intensities. Analysis of these intensity fluctuations yields the velocity of the Brownian motion and hence the particle size using the Stokes-Einstein relationship. The distribution can be a volume distribution (Dv), a surface distribution (Ds), or a number distribution (Dn). In context of this application, the dₓ value refers to a number distribution, wherein x% of the particles have a smaller diameter.

The surface of the inorganic particles is modified by the amphiphilic compound(s). The polar ends of the amphiphilic compound(s) will bind to the polar surfaces of the particles, the apolar ends will render the particles partially hydrophobic and surface active. The amphiphilic compound(s) thus comprise amphiphilic compounds with at least one polar head group and at least one apolar tail group, wherein the at least one head group is selected from the group consisting of phosphates, phosphonates, sulfates, sulfonates, alcohols, amines, amides, pyrrolidines, gallates, and carboxyl groups; and wherein the at least one tail group is selected from aliphatic (linear or branched) or aromatic or cyclic groups with 2 to 8 carbon atoms, wherein the carbon atoms are optionally substituted with one or more, same or different substituents selected from C₁₋₈-alkyl, OH, and NH₂.

Out of these amphiphilic compounds, amphiphilic compounds are preferred with at least one head group selected from the group consisting of carboxyl groups, amines and gallates, and at least one tail group selected from aliphatic groups with 2 to 8 carbon atoms.

A preferred carboxylic acid is nonanoic acid. A preferred gallate is propyl gallate. A preferred amine is heptylamine.

It is to be understood that at least one, i.e. one or more members of amphiphilic compounds may be used according to the invention, which means that also various mixtures of the above defined amphiphilic compounds are possible.

In a preferred embodiment, the amount of amphiphilic compound to inorganic particle surface is from 0.1 to 160 µmol/m², preferably from 0.5 to 140 µmol/m², more preferably from 1 to 120 µmol/m² and in particular from 1 to 60 µmol/m². In another preferred embodiment, the inorganic particles are provided in an amount of from 0.1 to 25 wt.-% with regard to the total weight of solids in the suspension to be foamed, preferably 0.1 to 15 wt.-%, more preferably 0.5 to 15 wt.-% and in particular 0.5 to 10 wt.-%.

Various optional additives may be used according to the present invention. In a preferred embodiment, the additive may be selected from the group consisting of pH modifiers, fillers, hardening accelerators, hardening retarders, rheology modifiers, plastizisers, superplasticizers, surfactants, fibers, fillers, waterglass, further hydrophobization agents, catalysts, aggregates, and mixtures thereof.

Rheology modifiers adjust the viscosity and thus the flow behavior and ensure a good balance between consistency, durability and application properties. These modifiers can be based on synthetic polymers (e.g. acrylic polymers), cellulose, silica, starches or clays.

Superplasticizers are polymers that function as dispersants to avoid particle segregation and improve the rheology and thus workability of suspensions. Superplasticizers generally can be divided into four categories: lignosulfonates, melamine sulfonates, naphthalene sulfonates, and comb polymers (e.g. polycarboxylate ethers, polyaromatic ethers, cationic copolymers, and mixtures thereof).

The setting time of the inorganic foam can be prolonged or shortened by the addition of certain compounds called retarders or, respectively, accelerators. Retarders can be divided into the groups of lignosulfonates, cellulose derivatives, hydroxyl carboxylic acids, organophosphates, synthetic retarders, and inorganic compounds. Non-limiting examples of retarders are hydroxyethyl cellulose, carboxymethyl hydroxyethyl cellulose, citric acid, tartaric acid, gluconic acid, glucoheptonate, maleic anhydride, 2-acrylamido-2-methylpropanesulfonic acid (AMPS) copolymers, borax, boric acid, and ZnO. Non-limiting examples of accelerators are CaCl₂, KCI, Na₂SiO₃, NaOH, Ca(OH)₂, and CaO × Al₂O₃, lithium salts such as Li₂CO₃ and Li₂SO₄, potassium silicate, and aluminum salts, such as aluminum sulfate.

Fibers (or stabilizing fibers) can be added during the foaming process to further increase the stability of the foam. Such fibers can be made of a variety of materials, such as rock (e.g. basalt), glass, carbon, organic polymers (e.g. polyethylene, polypropylene, polyacrylonitrile, polyamides, polyvinyl alcohols, etc.), cellulose, lignocellulose, metals (e.g. iron or steel), and mixtures thereof. Organic fibers are preferred. The amount of the fibers can be up to 3 wt.-%, preferably from 0.1 to 2 wt.-%, more preferably 0.1 to 1.5 wt.-% and in particular 0.2 to 1 wt.-%, based on the total weight of solids in the suspension to be foamed. The fibers preferably have a length of up to 200 mm or up to 120 mm, preferably up to 100 mm, more preferably up to 50 mm, most preferably up to 25 mm and in particular up to 20 mm, and a diameter of up to 100 µm.

The term "filler" refers primarily to materials that can be added to increase the volume without impairing the properties of the foam. The fillers mentioned can be selected from the group consisting of quartz sand or powdered quartz, low-density fillers (for example vermiculite, perlite, diatomaceous earth, mica, talc powder, magnesium oxide, foamed glass, hollow spheres, foam sand, clay, polymer particles), pigments (e.g. titanium dioxide), high density fillers (e.g. barium sulphate), metal salts (e.g. zinc salts, calcium salts, etc.), and mixtures thereof.

Inorganic foams are three-phase systems, wherein one phase is gaseous, one phase is liquid, and one phase is solid. Thus, it is to be understood that the foam comprises a gas. The gaseous phase is present as fine gas bubbles separated by cell walls obtained from the liquid and solid phases. The cell walls meet each other at edges which meet each other at nodes, thereby forming a framework. The liquid phase is water. However, the water may be partly removed upon hardening and drying. The solid phase of the foam comprises an inorganic binder such as a cement. Inorganic foams can be open-cell foams or closed-cell foams. In closed-cell foams, the gas is completely surrounded by the cell wall.

The gas phase present in the foam can be introduced by mechanical, physical or chemical foaming. Non-limiting examples of gases comprise air, nitrogen, noble gas, carbon dioxide, hydrocarbons, hydrogen, oxygen, and mixtures thereof.

The gas phase present in the foam can be introduced by mechanical foaming in the presence of the respective gas. Mechanical foaming may be performed for example by using a mixer, by an oscillating process, or by a stator-rotor process.

The gas phase can also be introduced by physical or chemical foaming. In physical foaming, blowing agents are preferably used which evaporate or effervescence from solutions to liberate a gas. Non-limiting examples of chemical foaming agents are peroxides, such as hydrogen peroxide, dibenzylperoxide, peroxobenzoic acid, peroxoacetic acid, alkali metal peroxides, perchloric acid, peroxomonosulfuric acid, dicumyl peroxide or cumyl hydroperoxide; isocyanates, carbonates and bicarbonates, such as Na₂CO₃ and NaHCO₃, which are preferably used in combination with an acid, e.g., a mineral acid; moreover metal powders, such as aluminum powder; azides, such as methyl azide; hydrazides, such as p-toluenesulfonylhydrazide; hydrazine.

In a preferred embodiment, the chemical foaming agent is hydrogen peroxide provided as an aqueous hydrogen peroxide solution comprising from 3 to 60 wt.-%, preferably from 10 to 50 wt.-% and in particular from 15 to 50 wt.-% hydrogen peroxide, wherein the aqueous hydrogen peroxide solution is added in an amount of from 0.01 to 10 wt.-%, preferably from 0.025 to 7.5 wt.-%, more preferably from 0.05 to 5 wt.-%, most preferably from 0.2 to 5 wt-% and in particular from 0.25 to 5 wt.-% based on the total weight of the suspension, assuming a 30 wt.-% hydrogen peroxide solution.

If chemical foaming is employed such foaming will be preferably performed by decomposition of peroxides such as hydrogen peroxide in the presence of a catalyst. Suitable catalysts preferably comprise Mn²⁺, Mn⁴⁺, Mn⁷⁺ or Fe³⁺ cations. Alternatively, the enzyme catalase may be used as a catalyst. Preferably, the catalyst is selected from the group consisting of MnSO₄, MnO₂, KMnO₄, and mixtures thereof. The catalyst may be used in an amount of from 0.01 to 5 wt.-%, preferably from 0.05 to 5 wt.-%, more preferably from 0.05 to 2.5 wt.-% and in particular from 0.1 to 1.0 wt.-%, based on the total weight of solids in the suspension to be foamed.

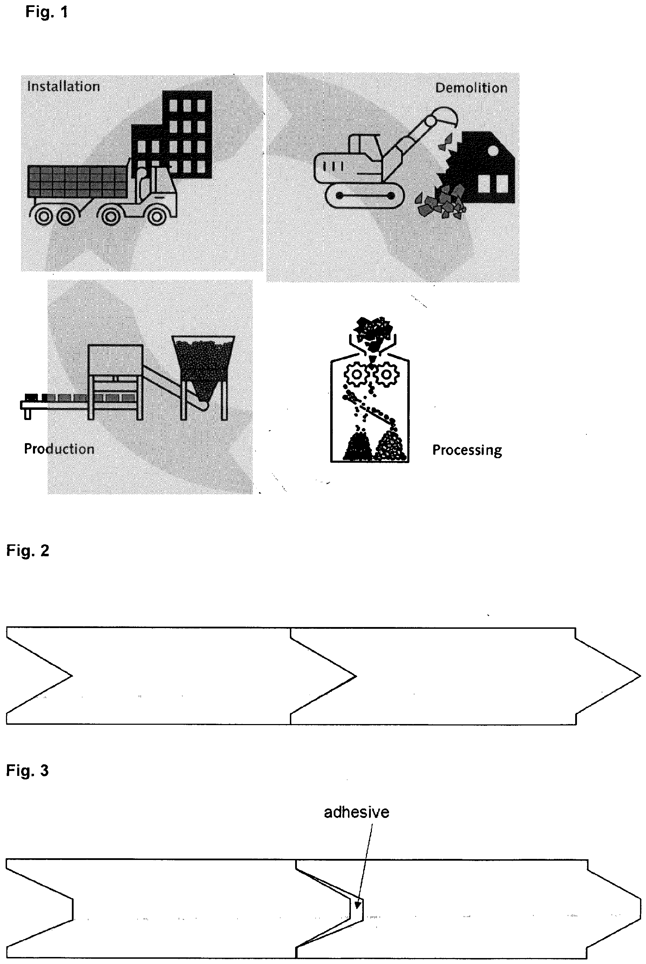

A schematic overview of the recycling loop of which the present process forms an integral part, is given in Fig. 1. The transformation of an existing building via demolition, processing and the production of a lightweight building material can be considered a full circle. It is safe to assume that a lightweight building material once produced will be used in new buildings. The installation step is not claimed herein.

Moreover, the dry density of the lightweight building material is controlled by adjusting the wet density of the foamed suspension.

According to a preferred embodiment, the existing building material is the product of the process according to the present invention. More preferably, if the existing building material is the product of the process according to the present invention, a quality parameter of the lightweight building material selected from compressive strength and homogeneity (and any other standard quality test parameter as established in the art) will be reduced by less than 10% with each performance of said process (i.e. for each recycling loop), more preferably by less than 5%, most preferably by less than 2%, and in particular by less than 1%.

Many parameters of the lightweight building materials of this process depend on the dry density of the material (for example compressive strength or thermal conductivity, among others). In order to compare lightweight building materials of different recycling loops, the specific quality parameter (quality parameter divided by dry density) should be compared. Thus, "quality parameter" is preferably defined as the respective parameter divided by the respective dry density. This, however implies a linear relationship between property and dry density which is often not the case and therefore this comparison should be made only if the standard deviation of the dry density of these lightweight building materials is within 10%, preferably within 5% of their average dry density.

Preferably, the lightweight building material according to the present invention has a homogeneous structure. "Homogeneous structure" means that the properties of at least four test bodies (e.g. 50 cm³) at any four arbitrary points of the material lie within a predetermined standard deviation. The term standard deviation is well known in the art of statistics. The term "homogeneous structure" can refer to one or more properties selected from the group consisting of density, porosity, average pore size, and pores size distribution (d₁₀, d₅₀ and d₉₀). The mean pore size and pore size distribution are determined for example by applying the Linear Intercept Method on images taken from the pore structure (microscope or camera). This method is well known in the field. The standard deviation of said property should be preferably less than 20%, more preferably less than 15%, even more preferably less than 10%, most preferably less than 5%, and particularly less than 3%, based on the average property value.

According to a second aspect, the present invention provides a lightweight building material having a dry density of from 60 to 1500 kg/m³, preferably from 60 to 1200 kg/m³ or from 300 to 1500 kg/m³, more preferably from 300 to 1200 kg/m³ and most preferably from 600 to 1000 kg/m³, which is obtainable by a process according to said invention. According to one preferred embodiment, the dry density may be from 60 to 299 kg/m³, according to another preferred embodiment, the dry density may be from 300 to 1500 kg/m³.

The lightweight building material may be provided in the form of bricks, hollow bricks, boards, panels or may be applied as filling material for example for cavities with simple or complex shapes. In the case of boards and panels, the board or panel may have at least one groove on one of its edges. Moreover, it may have at least one tongue on an opposite edge. The tongue may be triangular or trapezoidal in cross section (cf. Figs. 2, 3).

Other embodiments include a tongue with a rectangular cross-section or a tongue with a round e.g. semi-circular cross-section. Rectangular cross sections are easy to manufacture. Stress peaks can be avoided in embodiments with a round cross-section of the tongue. This can help avoid shrinkage cracks when setting. The tongue and groove system can be manufactured in such a way that there is a gap between the tongue and groove. This gap allows an adhesive to be applied to the tongue and the panels to be glued together without a visible joint or adhesive layer, as depicted in Fig. 3.

The present invention is further illustrated by the following non-limiting examples and the attached drawings.

In the drawings,
**Fig. 1** shows a recycling loop, including demolition, processing, production and installation,
**Fig. 2** shows a tongue and groove assembly with triangular design,
**Fig. 3** shows a tongue and groove assembly with trapezoidal design.

### EXAMPLES

The following recycling materials were used for the examples:
**"RCA"** - **Recycling concrete aggregates:** Demolition waste with a high content of hydrated concrete of any kind originating from the demolition of buildings or structures. This material is produced by different steps comprising breaking up, crushing and screening, and can be obtained in different size fractions. The RCA obtained and used herein had the following particle size distribution: d₁₀ 236 µm, d₅₀ 776 µm, d₉₀ 1773 µm
**"RCA CO₂"** - **Carbonated recycling concrete aggregates:** Recycling concrete aggregates exposed for a certain period to high concentrations of CO₂, forcing the carbonation of the cementitious matrix. The RCA CO₂ obtained and used herein had the following particle size distribution: d₁₀ 42 µm, d₅₀ 396 µm, d₉₀ 943 µm
**"HRA"** - **Heavyweight recycled aggregates:** Demolition waste of mineral kind that has been obtained by density-based separation. This material contains mainly the aggregates used for concrete production. The HRA obtained and used herein had the following particle size distribution: d₁₀ 3 µm, d₅₀ 156 µm, d₉₀ 1098 µm
**"LRA" - Lightweight recycled aggregates:** Demolition waste of mineral kind that has be obtained by density based separation. This material contains mainly cement matrix and crushed bricks. The LRA obtained and used herein had the following particle size distribution: d₁₀ 3 µm, d₅₀ 173 µm, d₉₀ 1099 µm
**"MCW" - Mineral construction waste:** Demolition waste of mineral kind obtained from the demolition of buildings or structures, where only steel, gypsum, wood, and further non-inorganic compounds have been removed. The MCW obtained and used herein had the following particle size distribution: d₁₀ 65 µm, dso 443 µm, d₉₀ 924 µm
**"FSE"** - **Fine sand of the Mineral construction waste produced by Eberhard Bau AG ("EbiMIK").** Fine sand that is obtained by the preparation of heavyweight-recycled aggregates and lightweight recycled aggregates. The FSE obtained and used herein had the following particle size distribution: d₁₀ 10 µm, d₅₀ 111 µm, d₉₀ 359 µm
**"SSW"** - **sludge from soil washing plant:** Sludge from soil washing plant which is collected from the filters of the plant. The SSW obtained and used herein had the following particle size distribution: d₁₀ 36 µm, d₅₀ 265 µm, d₅₀ 668 µm

### Examples 1.1 - 1.8: OPC foams with 70% recycled material of various types

### Example 1.1: OPC foam with 70% of RCA

90.4% of calcium carbonate (CaCO₃, Schäfer Precarb 100), 0.9% of nonanoic acid and 8.7% of manganese dioxide (MnO₂) were premixed to form a "Foam Formation Powder".

19.1% of ordinary Portland cement (OPC, CEM I 52.5R, Milke^{®}, HeidelbergCement AG), 2.1% of rapid hardening cement (QFlash^{®}, CEM 50, Concretum Construction Science AG), 1.5% of the foam formation powder, 53.4% of RCA (recycled material by Eberhard Bau AG), 0.1% of anhydrous citric acid (retarder), 22.9% of tap water and 0.9% of hydrogen peroxide (30% solution) were used.

All powders except the retarder were first premixed. The retarder was dissolved in the water and the water was then admixed to the powder while stirring in order to disperse the powders and form a homogeneous suspension with a minimum of agglomerates. After 5 min of stirring, the foaming of the suspension was initiated by adding the hydrogen peroxide. The so obtained slurry was poured to a mold where the foam expansion evolved until the decomposition of the hydrogen peroxide was completed. The prepared wet foam was stable until the setting reaction took place and the foam started to solidify. The OPC foam was stored overnight in a humid atmosphere to allow proper setting (room temperature, covered to avoid drying). Thereafter, it was demolded and again stored in a humid atmosphere until characterization took place (typically for 28 days). Afterwards it was dried at 40°C until mass constancy.

The resulting dry OPC foam part contained 70% of RCA, had a dimension of 150 mm × 150 mm × 150 mm and a homogeneous pore structure. Its dry density was 595 kg/m³ and its compressive strength after 28 days was 0.983 MPa.

The following Tables 1 and 2 give an overview over Examples 1.1 to 1.7 produced according to the description of Example 1.1.

**Table 1: Examples 1.1 to 1.4**

| | **Example 1.1** | **Example 1.2** | **Example 1.3** | **Example 1.4** |
|---|---|---|---|---|
| Recycled material in the resulting dry foam part | 70% RCA | 70% RCA CO2 | 70% HRA | 70% LRR |

| Foam Formation Powder: | | | | |
|---|---|---|---|---|
| Calcium Carbonate | 90.4% | 90.3% | 90.0% | 90.2% |
| Nonanoic Acid | 0.9% | 0.9% | 0.9% | 0.9% |
| Manganese Dioxide | 8.7% | 8.8% | 9.1% | 8.9% |
| OPC | 19.1% | 19.1% | 19.1% | 19.1% |
| CEM 50 | 2.1% | 2.1% | 2.1% | 2.1% |
| Recycled material | 53.4% | 53.4% | 53.4% | 53.4% |
| Foam Formation Powder | 1.5% | 1.5% | 1.5% | 1.5% |
| Retarder | 0.1% | 0.1% | 0.1% | 0.1% |
| Water | 22.9% | 22.9% | 22.9% | 22.9% |
| Hydrogen Peroxide (30%) | 0.9% | 0.9% | 0.9% | 0.9% |
| Dry density (kg/m³) | 595 | 576 | 592 | 615 |
| Compressive strength | 0.983 | 1.303 | 1.265 | 1.391 |
| 28 days (MPa) | | | | |

**Table 2: Examples 1.5 to 1.7**

| | **Example 1.5** | **Example 1.6** | **Example 1.7** |
|---|---|---|---|
| Recycled material in the resulting dry foam part | 70% MCW | 70% FSE | 70% SSW |
| Foam Formation Powder: | | | |
| Calcium Carbonate | 90.2% | 92% | 90.1% |
| Nonanoic Acid | 0.9% | 0.9% | 0.9% |
| Manganese Dioxide | 8.9% | 7.1% | 9.0% |
| OPC | 19.1% | 15.7 | 19.2 |
| CEM 50 | 2.1% | 1.7 | 2.1 |
| Recycled material | 53.4% | 44.8 | 53.4 |
| Foam Formation Powder | 1.5% | 1.7 | 1.5 |
| Retarder | 0.1% | 0.1 | 0.1 |
| Water | 22.9% | 35.2 | 22.9 |
| Hydrogen Peroxide (30%) | 0.9% | 0.8 | 0.9 |
| Dry density (kg/m³) | 579 | 494 | 588 |
| Compressive strength 28 days (MPa) | 1.004 | 0.624 | 1.117 |

Table 3 features the result of the microstructure analysis of Example 1.1. Four samples (Sample A to D) each with a dimension 4 cm × 4 cm × 4cm (64 cm³) were taken at random places of a block of Example 1.1. For each sample, the dry density and the pore size distribution (Linear Intercept Method with at least 300 intercepts per sample) were determined. The results show that the dry density and the d₁₀, d₅₀ and d₉₀ value of the pore size distribution have a standard deviation of less than 10%, even less than 7.5% and in most cases (except the d₉₀ value) less than 5% and the sample is therefore considered homogeneous.

**Table 3: Microstructure analysis of Example 1.1**

| | | **Pore Size Distribution** | | |
|---|---|---|---|---|
| | **Dry Density (kg/m³)** | **d₁₀ (µm)** | **d₅₀ (µm)** | **d₉₀ (µm)** |
| Sample A | 0.545 | 0.51 | 0.95 | 1.45 |
| Sample B | 0.532 | 0.55 | 0.95 | 1.48 |
| Sample C | 0.529 | 0.53 | 0.92 | 1.56 |
| Sample D | 0.526 | 0.55 | 0.95 | 1.62 |
| Average | 0.533 | 0.53 | 0.94 | 1.53 |
| Standard Deviation | 0.01 | 0.02 | 0.02 | 0.08 |
| Standard Deviation | 1.58% | 3.63% | 1.66% | 5.13% |

### Example 1.8: OPC foam with 70% of RCA, different mixing procedure

19.1% of ordinary Portland cement (OPC, CEM I 52.5R, Milke^{®}, HeidelbergCement AG), 2.1% of rapid hardening cement (QFlash^{®}, CEM 50, Concretum Construction Science AG), 1.4% of calcium carbonate (CaCO₃, Schäfer Precarb 100), 0.01% of nonanoic acid, 0.1% of manganese dioxide (MnO₂), 53.4% of RCA (recycled material by Eberhard Bau AG), 0.1% of anhydrous citric acid (retarder), 22.9% of tap water and 0.9% of hydrogen peroxide (30% solution) were used.

All powders except the retarder were first premixed. The nonanoic acid was then added to the powder premix while mixing and homogenized for 10 min. The retarder was dissolved in the water and the water was then admixed to the powder while stirring in order to disperse the powders and form a homogeneous suspension with a minimum of agglomerates. After 5 min of stirring, the foaming of the suspension was initiated by adding the hydrogen peroxide. The so obtained slurry was poured to a mold where the foam expansion evolved until the decomposition of the hydrogen peroxide was completed. The prepared wet foam was stable until the setting reaction took place and the foam started to solidify. The OPC foam was stored overnight in a humid atmosphere to allow proper setting (room temperature, covered to avoid drying). Thereafter, it was demolded and again stored in a humid atmosphere until characterization took place (typically for 28 days). Afterwards it was dried at 40°C until mass constancy.

The resulting dry OPC foam part contained 70% of RCA, had a dimension of 150 mm × 150 mm × 150 mm and a homogeneous pore structure. Its dry density was 598 kg/m³ and its compressive strength after 28 days was 0.959 MPa.

### Examples 2.1 - 2.2: OPC foams with 70% lightweight building material

### Example 2.1: Second recycling loop

Samples were produced according to the procedure described in Example 1.1. The recycled material was the lightweight building material of samples mixed from Examples 1.1 to 1.7.

### Example 2.2: Third recycling loop

Samples were produced according to the procedure described in Example 1.1. In Example 2.2, the recycled material was the lightweight building material of several samples from Example 2.1. The results are shown in Table 4 hereinbelow.

**Table 4: Examples 2.1 and 2.2**

| | **Example 2.1** | **Example 2.2** |
|---|---|---|
| | Lightweight building material from first recycling loop | Lightweight building material from second recycling loop |
| Recycled material in the resulting dry foam part | 70% mixture of lightweight building material from Examples 1.1 -1.7 | 70% mixture of lightweight building material from Examples 2.1 |
| Foam Formation Powder: | | |
| Calcium Carbonate | 92.1 % | 92.1% |
| Nonanoic Acid | 0.9% | 0.9% |
| Manganese Dioxide | 7.0% | 7.0% |
| OPC | 16.5% | 16.5% |
| CEM 50 | 1.8% | 1.8% |
| Recycled material | 47.1% | 47.1% |
| Foam Formation Powder | 1.7% | 1.7% |
| Retarder | 0.1% | 0.1% |
| Water | 32.0% | 32.0% |
| Hydrogen Peroxide (30%) | 0.8% | 0.8% |
| dry density (kg/m³) | 633 | 664 |
| Compressive strength 28 days (MPa) | 1.155 | 1.448 |
| Specific compressive strength 28 days (MPa / kg/m³) | 1.825 x 10⁻³ | 2.181 x 10⁻³ |

Both resulting dry OPC foam parts contained 70% of lightweight building material from the first, respectively second loop of this process, had dimensions of 150 mm × 150 mm × 150 mm and homogeneous pore structures. Example 2.1 features a specific compressive strength of 1.825 × 10⁻³ MPa/(kg/m³), whereas Example 2.2 shows a surprising and unexpected increase of the specific compressive strength to 2.181 × 10⁻³ MPa/(kg/m³). Both samples feature densities with a standard deviation well within 5% of the average density (average of 648.5 kg/m³, standard deviation of 21.9 kg/m³ or 3.4% of the average density). These examples show that the circular recycling process according to the present invention does not result in a downgrading of the manufactured lightweight building material even after several recycling cycles. This is also true for comparison of Example 2.1 with the average of Examples 1.1 to 1.7 (average dry density of 577 kg/m³, average specific compressive strength of 1.887 × 10⁻³ MPa/(kg/m³).

### Examples 3.1 - 3.3: OPC foams with various concentrations of RCA CO₂

Samples were produced according to the procedure described in Example 1.1. The results are shown in Table 5 hereinbelow.

**Table 5: Examples 3.1 - 3.3**

| | **Example 3.1** | **Example 3.2** | **Examples 3.3** |
|---|---|---|---|
| Recycled material in the resulting dry foam part | 88% RCA CO₂ | 70% RCA CO₂ | 40% RCA CO₂ |
| Foam Formation Powder: | | | |
| Calcium Carbonate | 90.3% | 90.3% | 90.3% |
| Nonanoic Acid | 0.9% | 0.9% | 0.9% |
| Manganese Dioxide | 8.8% | 8.8% | 8.8% |
| OPC | 6.9% | 19.3% | 40.0% |
| CEM 50 | 0.8% | 2.1% | 4.4% |
| Recycled material | 67.6% | 53.8% | 30.7% |
| Foam Formation Powder | 1.5% | 1.5% | 1.5% |
| Retarder | 0.03% | 0.1% | 0.2% |
| Water | 22.9% | 22.8% | 22.7% |
| Hydrogene Peroxide (30%) | 0.2% | 0.3% | 0.4% |
| dry density (kg/m³) | 953 | 984 | 951 |
| Compressive strength 28 days (MPa) | 1.358 | 5.852 | 8.058 |

The resulting dry OPC foam parts contained between 40 and 88% of RCA CO₂, had dimensions of 150 mm × 150 mm × 150 mm and homogeneous pore structures.

### Examples 4.1 - 4.2: Calcium Sulfoaluminate (CSA) foams with RCA and two different amphiphilic compouds (enanthic acid and propyl gallate)

Calcium Sulfoaluminate (Alipre^{®}, Italcementi) and Calcium Sulfate Dihydrate were used as binder.

All powders were first premixed. The water was then admixed to the powder while stirring in order to disperse the powders and form a homogeneous suspension with a minimum of agglomeration. After 15 min of stirring, the foaming of the suspension was initiated by adding the hydrogen peroxide. The so obtained slurry was poured to a mold where the foam expansion evolved until the decomposition of the hydrogen peroxide was completed. The prepared wet foam was stable until the setting reaction took place and the foam started to solidify. The CSA foam was stored overnight in a humid atmosphere to allow proper setting (room temperature, covered to avoid drying). Thereafter, it was demolded and dried at 40°C until mass constancy. The results are shown in Table 6 hereinbelow.

**Table 6: Examples 4.1 - 4.2**

| | **Example 4.1** | **Example 4.2** |
|---|---|---|
| Recycled material in the resulting dry foam part | 46% RCA | 46% RCA |
| Foam Formation Powder: | | |
| Calcium Carbonate | 84.5% | 80.9% |
| Amphiphilic compound | 5.5% enanthic acid | 8.7% propyl gallate |
| Manganese Dioxide | 9.9% | 10.4% |
| CSA | 18.7% | 18.7% |
| Calciumsulfate | 5.8% | 5.8% |
| Recycled material | 24.5% | 24.6% |
| Foam Formation Powder | 3.9% | 3.7% |
| Water | 44.0% | 44.1% |
| Hydrogene Peroxide (50%) | 3.1% | 3.1% |
| dry density (kg/m³) | 96 | 114 |

Both resulting dry CSA foam parts contained 46% of RCA, had dimensions of 150 mm × 150 mm × 150 mm and homogeneous pore structures.

## Claims

1. A circular process for the recycling of mineral waste and/or existing building materials to obtain a lightweight building material having a dry density of from 60 to 1500 kg/m³, preferably from 300 to 1200 kg/m³, comprising the steps of:
a) breaking up, crushing, and optionally milling, sorting, washing, filtering, concentrating, drying and/or screening mineral waste, existing building materials and/or soils to obtain a recycled material having a median particle size d₅₀, as measured by laser granulometry, of from 1 µm to 6 mm, preferably from 1 µm to 4 mm;
b) mixing 40 to 90 parts by weight of the recycled material, calculated as dry weight, and 10 to 60 parts by weight of a cement;
c) adding a foaming agent, optional additives and water to obtain a suspension;
d) foaming the resulting suspension by physical, chemical or mechanical means;
e) casting and allowing the foamed suspension to harden and dry.

2. The process according to claim 1, wherein the mineral waste and/or the existing building material comprises hydrated cement, hydrated concrete, bricks, brick dust, tiles, stones, gravel, sand, plaster, floor screed, lightweight materials, composite stone, chamotte, lime stone, calcined clay, the lightweight building material of this process, and mixtures thereof.

3. The process according to claim 1 or 2, wherein the foaming agent comprises at least one amphiphilic compound and at least one group of inorganic particles, wherein the inorganic particles are not identical to the recycled material and not identical to the cement.

4. The process according to claim 3, wherein the at least one group of inorganic particles is selected from the group consisting of oxides, hydroxides, carbides, nitrides, phosphates, carbonates, silicates, sulfates, and mixtures thereof.

5. The process according to claim 3 or 4, wherein the at least one group of inorganic particles is selected from the group consisting of silica particles, alumina particles, zirconia particles, calcium carbonate particles, and mixtures thereof.

6. The process according to any one of claims 3 to 5, wherein the at least one group of inorganic particles has a median particle size d₅₀, as measured by laser granulometry, of from 30 nm to 300 µm, preferably from 100 nm to 100 µm.

7. The process according to any one of claims 3 to 6, wherein the at least one amphiphilic compound comprises amphiphilic compounds with at least one polar head group and at least one apolar tail group, wherein the at least one head group is selected from the group consisting of phosphates, phosphonates, sulfates, sulfonates, alcohols, amines, amides, pyrrolidines, gallates, and carboxyl groups; and wherein the at least one tail group is selected from aliphatic or aromatic or cyclic groups with 2 to 8 carbon atoms, wherein the carbon atoms are optionally substituted with one or more, same or different substituents selected from C₁₋₈-alkyl, OH, and NH₂.

8. The process according to any one of claims 3 to 7, wherein the at least one amphiphilic compound comprises amphiphilic compounds with at least one head group selected from the group consisting of carboxyl groups and gallates, and at least one tail group selected from aliphatic groups with 2 to 8 carbon atoms.

9. The process according to any one of claims 1 to 8, wherein the cement is selected from cements of the categories CEM I, CEM II, CEM III, CEM IV, CEM V, preferably from Portland cement, high alumina cement, calcium sulfoaluminate cement, limestone calcined clay cement (LC3) or mixture thereof, with a possible integration of calcium sulfate.

10. The process according to any one of claims 1 to 9, wherein in step b) the weight ratio of the recycled material to the cement is in the range of from 50:50 to 90:10, preferably from 60:40 to 90:10, more preferably from 70:30 to 90:10 and in particular from 75:25 to 90:10.

11. The process according to any one of claims 1 to 10, wherein foaming is performed by decomposition of hydrogen peroxide in the presence of a catalyst, preferably MnO₂.

12. The process according to any one of claims 1 to 11, wherein the optional additives comprise pH modifiers, fillers, hardening accelerators, hardening retarders, rheology modifiers, plastizisers, superplasticizers, surfactants, fibers, fillers, waterglass, further hydrophobization agents, catalysts, aggregates, and mixtures thereof.

13. The process according to any one of claims 1 to 12, wherein the dry density of the lightweight building material is controlled by adjusting the wet density of the foamed suspension.

14. The process according to any one of claims 1 to 13, wherein the existing building material is the product of the process according to any one of claims 1 to 13.

15. A lightweight building material having a dry density of from 60 to 1500 kg/m³, preferably from 300 to 1200 kg/m³, more preferably from 600 to 1000 kg/m³, obtainable by a process according to any one of claims 1 to 14.
